# EUROPEAN PATENT APPLICATION

(11) **EP 4 550 234 A1**
(43) Date of publication of application: **07.05.2025**
(21) Application number: 24206407.9
(22) Date of filing: 14.10.2024
(51) Int. Cl.: G06Q 10/0631, G06Q 10/20, G05B 19/418, B65G 43/10, B65G 54/02, B60L 13/00

(54) **SYSTEM AND METHOD TO MONITOR AND BALANCE WEAR IN AN INDEPENDENT CART SYSTEM**

(30) Priority: 05.11.2023 US 202318502050
(71) Applicant: Rockwell Automation Technologies, Inc., Mayfield Heights, OH 44124 (US)
(72) Inventor: Huang, Yuhong, Devans, MA, 01434 (US); He, Meiling, Milwaukee, WI, 53204 (US); Maturana, Francisco P, Mayfield Heights, OH, 44124 (US); SayyarRodsari, Bijan, Austin, TX, 78759 (US)
(74) Representative: Grünecker Patent- und Rechtsanwälte PartG mbB

(57) **Abstract**

A system for distributing wear on multiple movers in an independent cart system includes a machine learning model executing on a processor. The machine learning model may include models of operation for each of the movers, and the machine learning model is operative to receive multiple inputs for each of the movers. Each of the inputs corresponds to an operating condition for one of the movers as the mover travels along a track for the independent cart system. Each of the inputs are received for each of the movers over multiple runs along the track, and the inputs received generate a training set of data for the movers. A weighting value is determined for each of the movers as a function of the training set of data, where the weighting value corresponds to a level of wear present on each of the movers.

## Description

### BACKGROUND INFORMATION

The subject matter disclosed herein relates to a system and method for monitoring and balancing wear on vehicles in an independent cart system. More specifically, a method and system of monitoring wear is utilized to dispatch vehicles in the independent cart system according to a set of rules regarding distribution of wear among the vehicles.

Motion control systems utilizing independent cart technology employ a linear drive system embedded within a track and multiple vehicles, also referred to as "movers" or carts, that are propelled along the track via the linear drive system. Movers and linear drive systems can be used in a wide variety of processes (e.g. packaging, manufacturing, and machining) and can provide an advantage over conventional conveyor belt systems with enhanced flexibility, extremely high-speed movement, and mechanical simplicity. The independently controlled movers or carts are each supported on a track for motion along the track. The track is made up of a number of track segments that, in turn, hold individually controllable electric coils. Successive activation of the coils establishes a moving electromagnetic field that interacts with the movers and causes the mover to travel along the track. Sensors may be spaced at fixed positions along the track and/or on the movers to provide information about the position and speed of the movers. Each of the movers may be independently moved and positioned along the track in response to the electromagnetic fields generated by the coils.

Recent developments in independent cart technology have seen a growth in the size and complexity of the systems. The number of movers in a single system may reach the hundreds or thousands. Track layouts may include numerous branches, stations at which operations are performed, queuing segments, and switches between different paths. Movers may be operated individually to perform a single task or to perform a variety of tasks. Movers may be operated in tandem to share a single payload. Still other applications may require a platoon of movers to travel in tandem. A central scheduler may be responsible for monitoring operation of the system and for commanding movers to travel between locations in the independent cart system.

Scheduling movers is not without certain challenges. One common scheduling technique is to command the closest mover to a station requiring servicing. Scheduling the closest mover to arrive at the station reduces travel time and increases throughput in the system. As the complexity of an independent cart system increases, however, certain segments of the system may have a higher operational demand than other segments. A primary segment of the system may run at or near one hundred percent utilization. Other segments of the system may house queuing segments or include stations which are required intermittently. A mover may be idle within or intermittently scheduled to travel on these latter segments. Movers located in segments with either the high utilization or the low utilization may tend to stay within the respective segments as they are closer in proximity to operations occurring within each segment. Uneven operational demand throughout the independent cart system can result in uneven demand and utilization of movers.

Uneven utilization of movers can result in uneven wear on a mover, and uneven wear can create variable performance between movers. The movers are driven along the track by a linear drive system. Coils within the track generate an electromagnetic field that interacts with a magnetic field generated by permanent magnets mounted on each mover. The performance of each mover is determined, at least in part, by an air gap between the coils and the magnets. When a new mover is inserted into the independent cart system, the air gap has an initial spacing between the coils and the magnets. As a mover travels along the track, contacting surfaces such as gliding surfaces or wheels experience wear and the spacing between the coils and the magnets decrease. Performance of movers will vary depending on the level of wear and the spacing provided by the air gap. Movers located in higher utilization segments of the independent cart system may experience increased wear and more variable performance compared to movers located in lower utilization segments.

In addition to varying performance, continued wear can cause failure of the mover. With continued wear, the gliding surface may wear completely until the body of the mover contacts the track. Excessive wear on an outer surface of a wheel may cause failure of the wheel. It is necessary to perform maintenance on movers with wear exceeding certain thresholds. However, with a varied level of wear between movers, it may become necessary for more frequent maintenance intervals. Highly worn movers may require frequent maintenance. Alternately, a first set of movers may require maintenance at a first interval, and a second set of movers may require maintenance at a second interval. The different maintenance intervals increase the number of times the independent cart system must be shut down for service.

Thus, it would be desirable to provide an improved method and system for monitoring wear of movers in an independent cart system.

It is a further object of the invention to schedule movers within the independent cart system according to a predefined set of rules to distribute wear among the movers according to those rules.

### BRIEF DESCRIPTION

According to one embodiment of the invention, a system for distributing wear on multiple movers in an independent cart system includes a sensor generating a feedback signal and a fleet manager. The feedback signal is selectively generated for each of the movers as each of the movers is present within a detection range for the sensor, and the feedback signal varies for a mover as a function of a level of wear present on the mover. The fleet manager includes a memory and a processor. The memory is operative to store multiple instructions and a weighting value for each of the movers, where the weighting value is determined as a function of the level of wear present on the mover. The processor is operative to execute the plurality of instructions to receive an order for one of the movers to travel along a track in the independent cart system and to read the weighting value from the memory for a first portion of the movers. The processor is further operative to determine a selected mover from the first portion of the movers as a function of the weighting value read for each of the movers and to generate a motion command for the selected mover as a function of the order.

According to another embodiment of the invention, a system for distributing wear on multiple movers in an independent cart system includes a machine learning model executing on a processor. The machine learning model is operative to receive multiple inputs for each of the movers. Each of the inputs corresponds to an operating condition for one of the movers as the mover travels along a track for the independent cart system. Each of the inputs are received for each of the movers over multiple runs along the track, and the inputs received generate a training set of data for the movers. A weighting value is determined for each of the movers as a function of the training set of data, where the weighting value corresponds to a level of wear present on each of the movers.

According to yet another embodiment of the invention, a method for distributing wear on multiple movers in an independent cart system includes monitoring operation of the movers over multiple runs along a track for the independent cart system and generating a weighting value corresponding to a level of wear present on each of the movers as a function of the runs. An order for one of the movers to travel along the track is received, and one of the movers is selected to complete the order as a function of the weighting value for each of the movers.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a schematic representation of an exemplary control system for an independent cart system according to one embodiment of the invention;
FIG. 2 is a perspective view of one embodiment of a mover configured to travel along the track of Fig. 1;
FIG. 3 is a front elevational view of the mover of Fig. 2;
FIG. 4 is a side elevational view of the mover of Fig. 2;
FIG. 5 is a top plan view of the mover of Fig. 2;
FIG. 6 is a perspective view of another embodiment of a mover configured to travel along the track of Fig. 1;
FIG. 7 is a front elevational view of the mover of Fig. 6;
FIG. 8 is a side elevational view of the mover of Fig. 6;
FIG. 9 is a top plan view of the mover of Fig. 6;
FIG. 10 is a sectional view of one embodiment of a mover and track segment included in the linear drive system taken at 10-10 of Fig. 1;
FIG. 11 is a perspective view of one embodiment of a magnet array used within the mover of Fig. 10;
FIG. 12 is a partial top cutaway view of the mover and track segment of Fig. 1;
FIG. 13 is a block diagram representation of the exemplary control system of Fig. 1;
FIG. 14 is a partial top plan view for an exemplary independent cart system;
FIG. 15 is a flowchart illustrating steps for distributing wear between movers according to one embodiment of the invention;
FIG. 16 is a graphical representation of a change in a feedback signal as a function of wear; and
FIG. 17 is a block diagram representation of an independent cart system according to one embodiment of the present invention with the tracks implemented as predefined paths and the vehicles implements as automated guided vehicles to travel along the predefined paths.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein describes an improved method and system for monitoring wear of movers in an independent cart system. A sensor is used to monitor wear on each mover in the independent cart system. According to one aspect of the invention, an existing sensor, such as the position sensors detecting the magnetic field generated by the drive magnets may be used. As contacting surfaces wear on the mover, the drive magnets get closer to the sensors, changing the feedback signal detected by the magnetic field sensors. According to another aspect of the invention, a new sensor, such as an optical sensor, may be used to monitor a distance between a mark on the side of the mover and the surface of the track. The distance will decrease as the contacting surfaces of the mover wear. The feedback signal generated by the sensor includes data corresponding to a level of wear on each mover.

It is a further object of the invention to utilize the wear information obtained from the sensors to schedule movers within the independent cart system to distribute wear among the movers according to those rules. According to one aspect of the invention, a machine learning system is loaded with a predefined set of rules that define expected wear of a mover based on operating conditions. The machine learning system receives the feedback signals from the sensors corresponding to actual wear on the movers and further trains the machine learning system, refining the initial rules. The machine learning system may be used to generate predictions of when movers will require maintenance to avoid failure and/or when movers will fail without preventive maintenance. According to another aspect of the invention, the machine learning system may initially be untrained. The machine learning system may receive input corresponding to operating conditions for each mover as well as feedback signals indicating a level of wear present on each mover. The machine learning system may identify patterns of operation in the independent cart system and generate predications of when movers will require maintenance to avoid failure and/or when movers will fail without preventive maintenance as a result of the patterns of operations. The outputs of the machine learning system may also be used to inform a fleet manager of wear on individual movers.

The fleet manager uses the information generated by the machine learning system to schedule movers within the independent cart system. The fleet manager may store rules corresponding to preferred maintenance schedules. For example, in one application it may be desirable to provide even wear across all movers, such that all movers are serviced during a single shut-down period. In another application, it may be desirable to increase wear on a subset of movers, such that those movers may be taken out of service for maintenance while other movers continue operation. Based on existing wear detected on each mover and the wear predictions generated by the machine learning system, the fleet manager schedules movers to perform tasks within the independent cart system to achieve the preferred maintenance schedules.

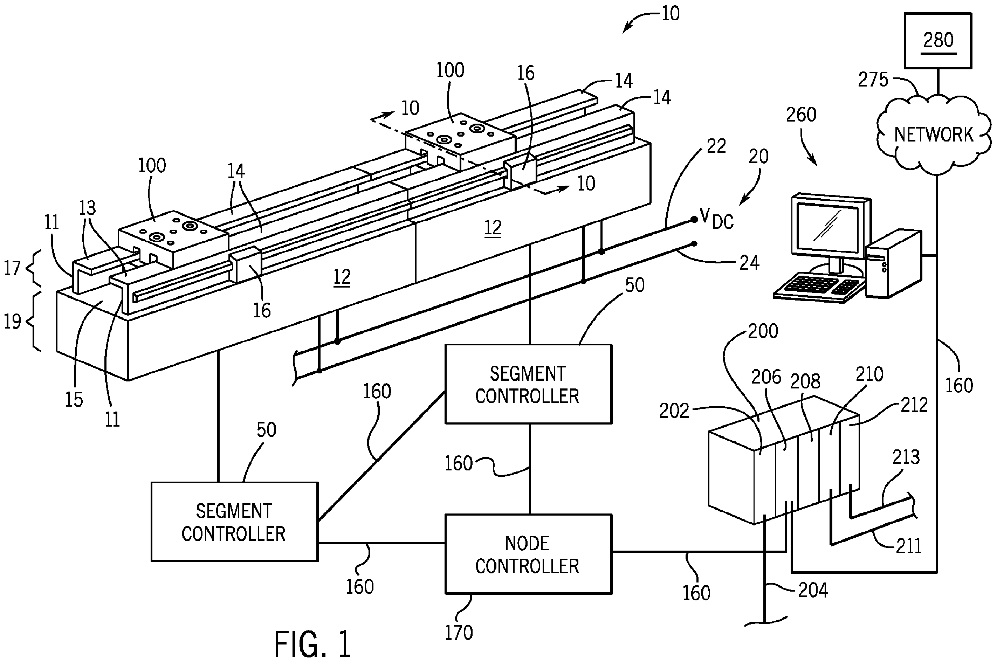

Turning initially to Fig. 1, an exemplary transport system for moving articles or products includes a track 10 made up of multiple segments 12. According to the illustrated embodiment, multiple segments 12 are joined end-to-end to define the overall track configuration. The illustrated segments 12 are both straight segments having generally the same length. It is understood that track segments of various sizes, lengths, and shapes may be connected together to form the track 10 without deviating from the scope of the invention. The track 10 is illustrated in a horizontal plane. For convenience, the horizontal orientation of the track 10 shown in Fig. 1 will be discussed herein. Terms such as upper, lower, inner, and outer will be used with respect to the illustrated track orientation. These terms are relational with respect to the illustrated track and are not intended to be limiting. It is understood that the track may be installed in different orientations, such as sloped or vertical, and include different shaped segments including, but not limited to, straight segments, inward bends, outward bends, up slopes, down slopes, right-hand switches, left-hand switches, and various combinations thereof. The width of the track 10 may be greater in either the horizontal or vertical direction according to application requirements. The movers 100 will travel along the track and take various orientations according to the configuration of the track 10 and the relationships discussed herein may vary accordingly.

According to the illustrated embodiment, each track segment 12 includes an upper portion 17 and a lower portion 19. The upper portion 17 is configured to carry the movers 100 and the lower portion 19 is configured to house the control elements. As illustrated, the upper portion 17 includes a pair of rails 14 extending longitudinally along the upper portion 17 of each track segment 12 and defining a channel 15 between the two rails. Clamps 16 affix to the sides of the rails 14 and secure the rails 14 to the lower portion 19 of the track segment 12. Each rail 14 is generally L-shaped with a side segment 11 extending in a generally orthogonal direction upward from the lower portion 19 of the track segment 12, and a top segment 13 extending inward toward the opposite rail 14. The top segment 13 extends generally parallel to the lower portion 19 of the track segment 12 and generally orthogonal to the side segment 11 of the rail 14. Each top segment 13 extends toward the opposite rail 14 for only a portion of the distance between rails 14, leaving a gap between the two rails 14. The gap and the channel 15 between rails 14 define a guideway along which the movers 100 travel.

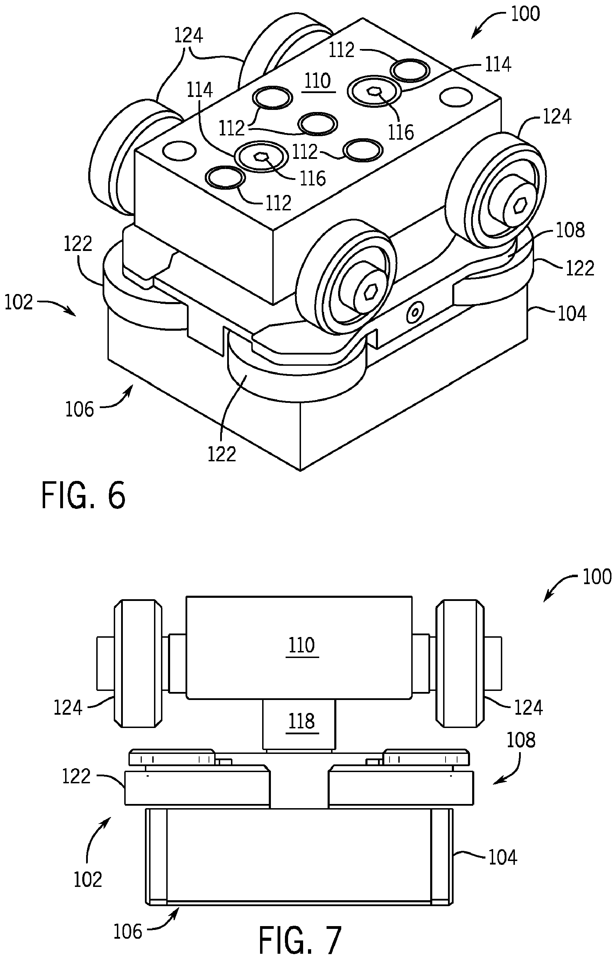

According to one embodiment, the surfaces of the rails 14 and of the channel 15 are planar surfaces made of a low friction material along which movers 100 may slide. The contacting surfaces of the movers 100 may also be planar and made of a low friction material. It is contemplated that the surface may be, for example, nylon, Teflon^{®}, aluminum, stainless steel and the like. According to one aspect of the invention, the hardness of the surfaces on the track segment 12 are greater than the contacting surface of the movers 100 such that the contacting surfaces of the movers 100 wear faster than the surface of the track segment 12. It is further contemplated that the contacting surfaces of the movers 100 may be removably mounted to the mover 100 such that they may be replaced if the wear exceeds a predefined amount. According to still other embodiments, the movers 100 may include low-friction rollers 122, 124 (See e.g., Fig. 6) to engage the surfaces of the track segment 12. Optionally, the surfaces of the channel 15 may include different cross-sectional forms with the mover 100 including complementary sectional forms. Various other combinations of shapes and construction of the track segment 12 and mover 100 may be utilized without deviating from the scope of the invention.

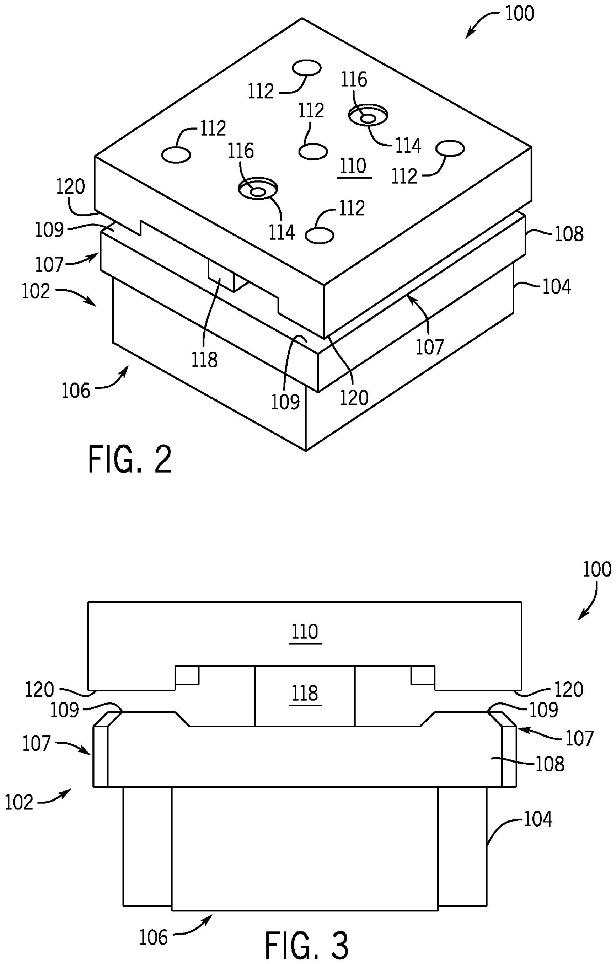

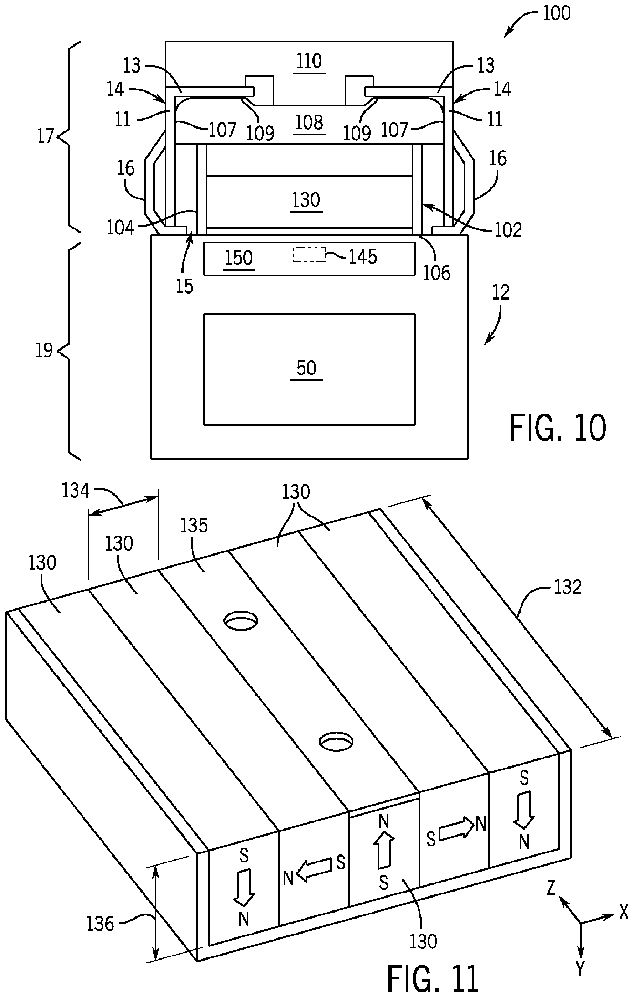

Turning next to Figs 2-5, one embodiment of the mover 100 is configured to slide along the channel 15 as it is propelled by a linear drive system. The mover 100 includes a body 102 configured to fit within the channel 15. The body 102 includes a lower portion 104, configured to hold magnets 130 (see also Fig. 10), and an upper portion 108, configured to engage the rails 14. The lower portion has a lower surface 106 to slide along the bottom surface of the channel 15. The upper portion 108 includes side contacting surfaces 107 which slide along an interior surface of the side segments 11 of the rails 14 and upper contacting surfaces 109 which slide along an interior surface of the top segments 13 of the rails 14. The mover 100 also includes a platform 110 mounted to the body 102 of the mover. An upper surface of the platform 110 includes multiple threaded openings 112 to which a fixture, or workpiece, may be mounted. Various workpieces, clips, fixtures, and the like may be mounted on the top of each platform 110 for engagement with a product to be carried along the track by the mover 100 according to an application's requirements. The platform 110 also includes a pair of openings 114 through which a threaded fastener 116 such as a bolt may be used to secure the platform 110 to the body 102 of the mover 100. A central guide portion 118 of the platform 110 extends downward toward the body 102 of the mover 100. The central guide portion 118 has a width less than the gap between the two rails 14 and fits within the gap between rails when the mover 100 is mounted on the track. The central guide portion 118 also extends further than lower contacting surfaces 120 on the platform 110 creating a gap between the upper contacting surfaces 109 of the body 102 and the lower contacting surfaces 120 of the platform 110 equal to the width of the top segment 13 of the rails 14 such that the lower contacting surfaces 120 of the platform 110 slide along an exterior surface of the top segments 13 of the rails. According to the illustrated embodiment, the platform 110 is generally square and has a sectional area similar to the sectional area of the body 102 as viewed from the top of the mover 100. It is contemplated that platforms 110, or attachments, of various shapes may be secured to the body 102.

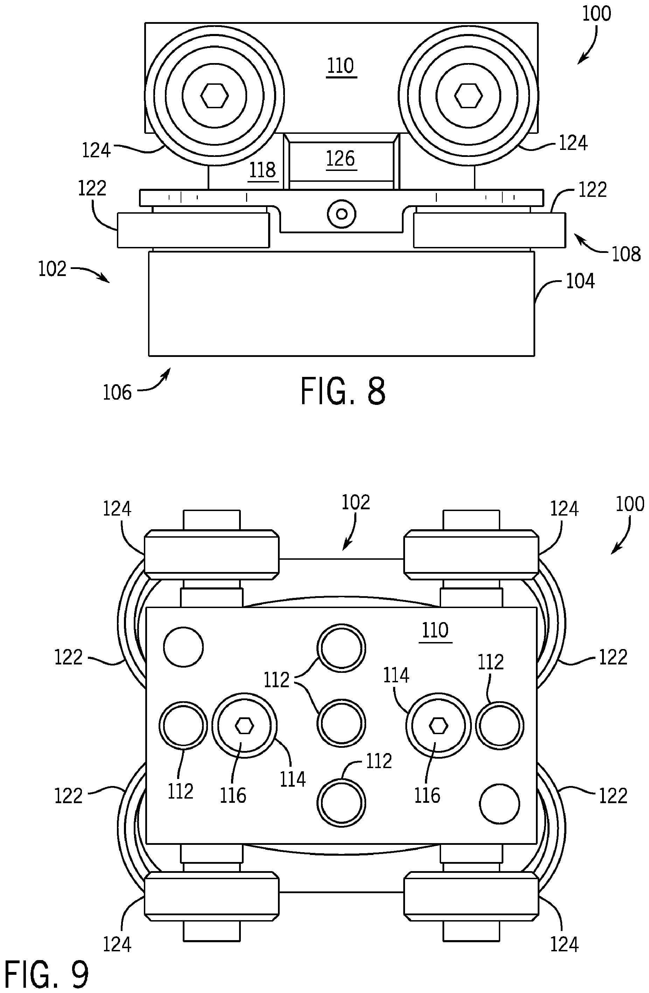

Turning next to Figs 6-9, another embodiment of the mover 100 is configured to roll along the track as it is propelled by a linear drive system. The mover 100 includes a body 102 configured to fit within the channel 15. The body 102 includes a lower portion 104, configured to hold magnets 130 (see also Fig. 10), and an upper portion 108, configured to engage the rails 14. The lower portion has a lower surface 106 to slide along the bottom surface of the channel 15. The upper portion 108 includes side wheels 122 mounted in a horizontal configuration to roll along an interior surface of the side segments 11 of the rails 14. The mover 100 also includes a platform 110 mounted to the body 102 of the mover. An upper surface of the platform 110 includes multiple threaded openings 112 to which a fixture, or workpiece, may be mounted. Various workpieces, clips, fixtures, and the like may be mounted on the top of each platform 110 for engagement with a product to be carried along the track by the mover 100 according to an application's requirements. The platform 110 also includes a pair of openings 114 through which a threaded fastener 116 such as a bolt may be used to secure the platform 110 to the body 102 of the mover 100. The platform includes top wheels 124 mounted in a vertical orientation to roll along an exterior surface of the top segment 13 of each rail 14. A central guide portion 118 of the platform 110 extends downward toward the body 102 of the mover 100. The central guide portion 118 has a width less than the gap between the two rails 14 and fits within the gap between rails when the mover 100 is mounted on the track. The central guide portion 118 also extends further than top wheels 124 on the platform 110 creating a gap between the top wheels 124 and the side wheels 122 at least as large as the width of the top segment 13 of the rails 14 such that the top segment 13 of the rails fits between the top and side wheels. The central guide portion 118 further includes a center wheel 126 which may engage an edge of a rail 14 if the mover 100 moves too far to one side or the other of the channel 15. The center wheel 126 also assists in directing the mover 100 along switches between different track segments 12. According to the illustrated embodiment, the platform 110 is generally rectangular and has a length similar to a length of the body 102 as viewed from the top of the mover 100. It is contemplated that platforms 110, or attachments, of various shapes may be secured to the body 102.

The mover 100 is carried along the track 10 by a linear drive system. The linear drive system is incorporated in part on each mover 100 and in part within each track segment 12. One or more drive magnets 130 are mounted to each mover 100. With reference to Fig. 10, the drive magnets 130 are arranged in a block on the lower surface of each mover. With reference also to Fig. 11, the illustrated embodiment includes five drive magnets 130 placed adjacent to each other in a Halbach array to define the block of magnets. Each magnet 130 has a length 132 extending in the z-axis, a width 134 extending in the x-axis, and a height 136 extending in the y-axis. From left-to-right in Fig. 11, a first drive magnet 130 has a north pole oriented along a y-axis toward the track when the mover 100 is mounted on the track. A second drive magnet 130 has a north pole oriented along an x-axis, and a third drive magnet 130 has a north pole oriented along the y-axis away from the track. A fourth drive magnet 130 has a north pole oriented along the x-axis in a direction opposite the second magnet, and a fifth drive magnet 130 has the north pole again oriented toward the track along the y-axis. As also illustrated, an orientation of the magnetic field is illustrated by the arrow pointing from the south pole toward the north pole. For movers 100 having a greater length, this rotation of the orientation for the drive magnets 130 may continue along the length of the mover 100. The Halbach array configuration has an advantage of cancelling magnetic flux tending to extend upward into the rest of the mover 100 while increasing the magnetic flux tending to extend downward toward the track for interaction with the linear drive system. The illustrated embodiment for the arrangement of drive magnets 130 is not intended to be limiting. Various other configurations of the drive magnets 130 may be utilized as non-illustrated embodiments of the invention.

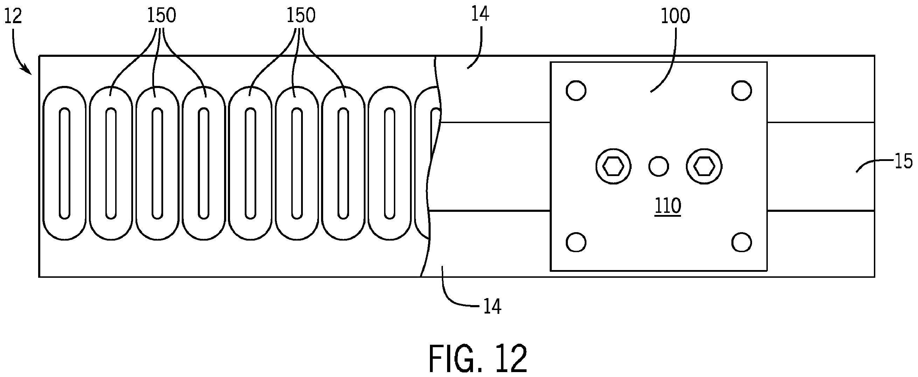

The linear drive system further includes a series of coils 150 spaced along the length of the track segment 12. With reference also to Fig 12, the coils 150 may be positioned within a housing for the lower portion 19 of the track segment 12 and below the surface of the channel 15. The coils 150 are energized sequentially according to the configuration of the drive magnets 130 present on the movers 100. The sequential energization of the coils 150 generates a moving electromagnetic field that interacts with the magnetic field of the drive magnets 130 to propel each mover 100 along the track segment 12.

A segment controller 50 is provided within each track segment 12 to control the linear drive system and to achieve the desired motion of each mover 100 along the track segment 12. Although illustrated in Fig. 1 as blocks external to the track segments 12, the arrangement is to facilitate illustration of interconnects between controllers. As shown in Fig. 10, it is contemplated that each segment controller 50 may be mounted in the lower portion 19 of the track segment 12. Each segment controller 50 is in communication with a node controller 170 which is, in turn, in communication with an industrial controller 200. The industrial controller may be, for example, a programmable logic controller (PLC) configured to control elements of a process line stationed along the track 10. The process line may be configured, for example, to fill and label boxes, bottles, or other containers loaded onto or held by the movers 100 as they travel along the line. In other embodiments, robotic assembly stations may perform various assembly and/or machining tasks on workpieces carried along by the movers 100. The exemplary industrial controller 200 includes: a power supply 202 with a power cable 204 connected, for example, to a utility power supply; a communication module 206 connected by a network medium 160 to the node controller 170; a processor module 208; an input module 210 receiving input signals 211 from sensors or other devices along the process line; and an output module 212 transmitting control signals 213 to controlled devices, actuators, and the like along the process line. The processor module 208 may identify when a mover 100 is required at a particular location and may monitor sensors, such as proximity sensors, position switches, or the like to verify that the mover 100 is at a desired location. The processor module 208 transmits the desired locations of each mover 100 to a node controller 170 where the node controller 170 operates to generate commands for each segment controller 50.

As further illustrated in Fig. 1, the independent cart system may include a local, edge controller 260, a remote application executing and hosted in a data processing center 280, or a combination thereof. The edge controller 260 is connected to the industrial controller 200 via the network medium 160. If a remote application is being used, the edge controller 260 and/or the industrial controller 200 is connected to the data processing center 280 via a suitable network 275. The network 275 may include a local intranet, the Internet, or a combination thereof. The network 275 may be wired or wireless, including Wi-Fi or cellular communications over a single channel or multiple channels.

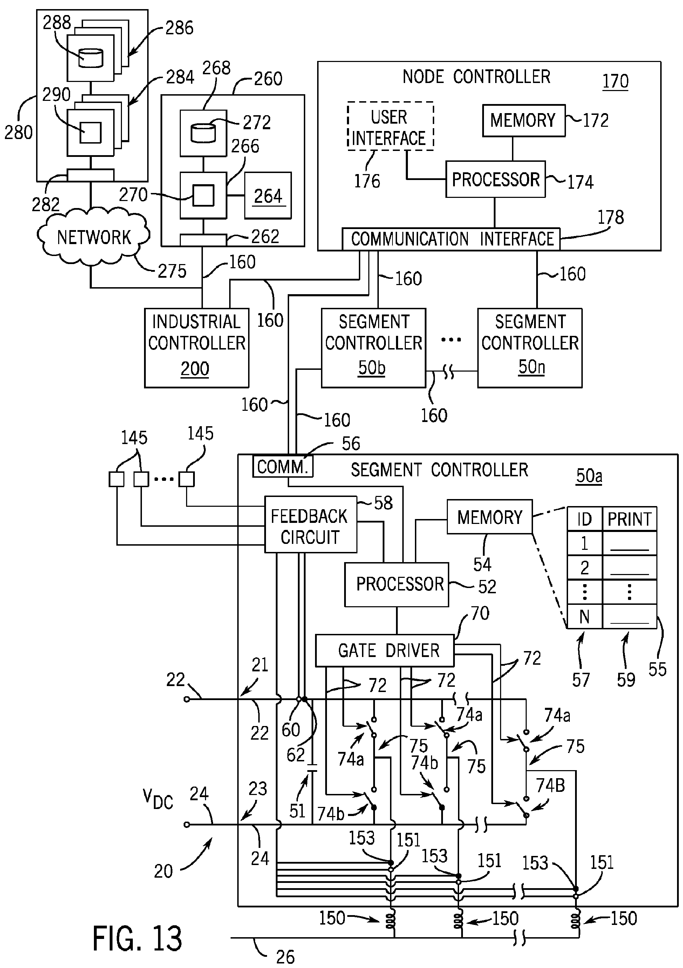

With reference also to Fig. 13, the edge controller 260 includes a communication interface 262 to connect to the network medium 160. The communication interface 262 is configured to transmit and receive data packets between the network and a processor 266 present in the edge controller 260. The edge controller 260 includes the processor 266 and memory 268. It is contemplated that the processor 266 and memory 268 may each be a single electronic device or formed from multiple devices. The processor 266 may be a microprocessor. Optionally, the processor 266 and/or at least a portion of the memory 268 may be integrated on a field programmable gate array (FPGA) or an application specific integrated circuit (ASIC). The memory 268 may include volatile memory, non-volatile memory, or a combination thereof. The memory 268 may further include fixed or removable storage medium, such as a magnetic or solid-state hard disk drive, a fixed or removable memory card, an optical drive, or a combination thereof. An optional user interface 264 may be provided for an operator to interface with the edge controller 260. The user interface 264 may include a monitor, keyboard, mouse, trackball, touch pad, touch screen, or any other suitable device to receive input from or display data to a user. Optionally, the edge controller 260 may be accessed via the network 275 from a remote device.

The edge controller 260 is configured to execute one or more applications 270 on the processor. The edge controller 260 may execute independently or in combination with the data processing center 280. As will be discussed in more detail below, the edge controller 260 may execute a fleet manager and a machine learning model corresponding to the independent cart system. The memory 268 is configured to store a database 272 including rules for the machine learning model, a history of reference and/or feedback signals from the independent cart system, and patterns detected within the independent cart system. The fleet manager receives commands corresponding to a request to deploy a mover 100 to a particular location and utilizes the rules, historical data, and/or detected patterns to dispatch one of the movers 100 in response to the request.

Similarly, a data processing center 280 includes a communication interface 282. The communication interface 282 provides access to the network 275 and transmits data packets between the data processing center 280 and the industrial controller 200 or the edge controller 260. Although illustrated as a single data processing center, the data processing center may be distributed among multiple facilities providing Infrastructure as a Service (IaaS) or Platform as a Service (PaaS), where the IaaS or PaaS host the application executing thereon as Software as a Service (SaaS). The data processing center 280 further includes multiple processing units 284 and multiple storage units 286. One or more of the processing units 284 is configured to execute applications 290 such as a fleet manager or a machine learning model. The applications 290 are in communication with the storage units 286 to store data to and read data from one or more databases 288 stored on one or more storage units 286. Operation of the fleet manager and machine learning model will be discussed in more detail below.

With reference also to Fig. 13, the node controller 170 includes a processor 174 and a memory device 172. It is contemplated that the processor 174 and memory device 172 may each be a single electronic device or formed from multiple devices. The processor 174 may be a microprocessor. Optionally, the processor 174 and/or the memory device 172 may be integrated on a field programmable gate array (FPGA) or an application specific integrated circuit (ASIC). The memory device 172 may include volatile memory, non-volatile memory, or a combination thereof. An optional user interface 176 may be provided for an operator to configure the node controller 170 and to load or configure desired motion profiles for the movers 100 on the node controller 170. Optionally, the configuration may be performed via a remote device connected via a network and a communication interface 178 to the node controller 170. It is contemplated that the node controller 170 and user interface 176 may be a single device, such as a laptop, notebook, tablet or other mobile computing device. Optionally, the user interface 176 may include one or more separate devices such as a keyboard, mouse, display, touchscreen, interface port, removable storage medium or medium reader and the like for receiving information from and displaying information to a user. Optionally, the node controller 170 and user interface may be an industrial computer mounted within a control cabinet and configured to withstand harsh operating environments. It is contemplated that still other combinations of computing devices and peripherals as would be understood in the art may be utilized or incorporated into the node controller 170 and user interface 176 without deviating from the scope of the invention.

The node controller 170 includes one or more programs stored in the memory device 172 for execution by the processor 174. The node controller 170 receives a desired position from the industrial controller 200 and determines one or more motion profiles for the movers 100 to follow along the track 10. A program executing on the processor 174 is in communication with each segment controller 50 on each track segment via a network medium 160. The node controller 170 may transfer a desired motion profile to each segment controller 50. Optionally, the node controller 170 may be configured to transfer the information from the industrial controller 200 identifying one or more desired movers 100 to be positioned at or moved along the track segment 12, and the segment controller 50 may determine the appropriate motion profile for each mover 100. Various features of the present application will be discussed herein as being executed within the segment controller 50, the industrial controller 200, and the node controller 170. As illustrated in Figs. 1 and 13, these controllers are interconnected by the network medium 160. According to other, non-illustrated embodiments of the invention, various features discussed herein as implemented on one of the controllers 50, 200, 170 may be implemented on another controller with communication via the network medium 160 transmitting data required to perform the functions between the various controllers.

A position feedback system provides knowledge of the location of each mover 100 along the length of the track segment 12 to the segment controller 50. According to one embodiment of the invention, the position feedback system includes one or more position magnets mounted to the mover 100. According to another embodiment of the invention, illustrated in Fig. 10, the position feedback system utilizes the drive magnets 130 as position magnets. Position sensors 145 are positioned along the track segment 12 at a location suitable to detect the magnetic field generated by the drive magnets 130. According to the illustrated embodiment, the position sensors 145 are located below or interspersed with the coils 150. The sensors 145 are positioned such that each of the drive magnets 130 are proximate to the sensor as the mover 100 passes each sensor 145. The sensors 145 are a suitable magnetic field detector including, for example, a Hall Effect sensor, a magneto-diode, an anisotropic magnetoresistive (AMR) device, a giant magnetoresistive (GMR) device, a tunnel magnetoresistance (TMR) device, fluxgate sensor, or other microelectromechanical (MEMS) device configured to generate an electrical signal corresponding to the presence of a magnetic field. The magnetic field sensor 145 outputs a feedback signal provided to the segment controller 50 for the corresponding track segment 12 on which the sensor 145 is mounted. The position sensors 145 are spaced apart along the length of the track. According to one aspect of the invention, the position sensors 145 are spaced apart such that adjacent position sensors 145 generate a feedback signal which is offset from each other by ninety electrical degrees (90°). Multiple position sensors 145 are, therefore, generating feedback signals in tandem for a single mover 100 as the mover is travelling along the track 10. The feedback signals from each position sensor 145 are provided to a feedback circuit 58 which, in turn, provides a signal to the processor 52 corresponding to the magnet 130 passing the sensor 145.

The segment controller 50 also includes a communication interface 56 that receives communications from the node controller 170 and/or from adjacent segment controllers 50. The communication interface 56 extracts data from the message packets on the industrial network and passes the data to a processor 52 executing in the segment controller 50. The processor may be a microprocessor. Optionally, the processor 52 and/or a memory device 54 within the segment controller 50 may be integrated on a field programmable gate array (FPGA) or an application specific integrated circuit (ASIC). It is contemplated that the processor 52 and memory device 54 may each be a single electronic device or formed from multiple devices. The memory device 54 may include volatile memory, non-volatile memory, or a combination thereof. The segment controller 50 receives the motion profile or desired motion of the movers 100 and utilizes the motion commands to control movers 100 along the track segment 12 controlled by that segment controller 50.

Each segment controller 50 generates switching signals to generate a desired current and/or voltage at each coil 150 in the track segment 12 to achieve the desired motion of the movers 100. The switching signals 72 control operation of switching devices 74 for the segment controller 50. According to the illustrated embodiment, the segment controller 50 includes a dedicated gate driver module 70 which receives command signals from the processor 52, such as a desired voltage and/or current to be generated in each coil 150, and generates the switching signals 72. Optionally, the processor 52 may incorporate the functions of the gate driver module 70 and directly generate the switching signals 72. The switching devices 74 may be a solid-state device that is activated by the switching signal, including, but not limited to, transistors, thyristors, or silicon-controlled rectifiers.

According to the illustrated embodiment, the track receives power from a distributed DC voltage. With reference again to Fig. 1, a DC bus 20 receives a DC voltage, VDC, from a DC supply and conducts the DC voltage to each track segment 12. The illustrated DC bus 20 includes two voltage rails 22, 24 across which the DC voltage is present. The DC supply may include, for example, a rectifier front end configured to receive a single or multi-phase AC voltage at an input and to convert the AC voltage to the DC voltage. It is contemplated that the rectifier section may be passive, including a diode bridge or, active, including, for example, transistors, thyristors, silicon-controlled rectifiers, or other controlled solid-state devices. Although illustrated external to the track segment 12, it is contemplated that the DC bus 20 would extend within the lower portion 19 of the track segment. Each track segment 12 includes connectors to which either the DC supply or another track segment may be connected such that the DC bus 20 may extend for the length of the track 10. Optionally, each track segment 12 may be configured to include a rectifier section (not shown) and receive an AC voltage input. The rectifier section in each track segment 12 may convert the AC voltage to a DC voltage utilized by the corresponding track segment.

The DC voltage from the DC bus 20 is provided at the input terminals 21, 23 to a power section for the segment controller. A first voltage potential is present at the first input terminal 21 and a second voltage potential is present at the second input terminal 23. The DC bus extends into the power section defining a positive rail 22 and a negative rail 24 within the segment controller. The terms positive and negative are used for reference herein and are not meant to be limiting. It is contemplated that the polarity of the DC voltage present between the input terminals 21, 23 may be negative, such that the potential on the negative rail 24 is greater than the potential on the positive rail 22. Each of the voltage rails 22, 24 are configured to conduct a DC voltage having a desired potential, according to application requirements. According to one embodiment of the invention, the positive rail 22 may have a DC voltage at a positive potential and the negative rail 24 may have a DC voltage at ground potential. Optionally, the positive rail 22 may have a DC voltage at ground potential and the negative rail 24 may have a DC voltage at a negative potential According to still another embodiment of the invention, the positive rail 22 may have a first DC voltage at a positive potential with respect to the ground potential and the negative rail 24 may have a second DC voltage at a negative potential with respect to the ground potential. The resulting DC voltage potential between the two rails 22, 24 is the difference between the potential present on the positive rail 22 and the negative rail 24.

It is further contemplated that the DC supply may include a third voltage rail 26 having a third voltage potential. According to one embodiment of the invention, the positive rail 22 has a positive voltage potential with respect to ground, the negative rail 24 has a negative voltage potential with respect to ground, and the third voltage rail 26 is maintained at a ground potential. Optionally, the negative voltage rail 24 may be at a ground potential, the positive voltage rail 22 may be at a first positive voltage potential with respect to ground, and the third voltage rail 26 may be at a second positive voltage potential with respect to ground, where the second positive voltage potential is approximately one half the magnitude of the first positive voltage potential. With such a split voltage DC bus, two of the switching devices 74 may be used in pairs to control operation of one coil 150 by alternately provide positive or negative voltages to one the coils 150.

The power section in each segment controller 50 may include multiple legs, where each leg is connected in parallel between the positive rail 22 and the negative rail 24. According to the illustrated embodiment, three legs are shown. However, the number of legs may vary and will correspond to the number of coils 150 extending along the track segment 12. Each leg includes a first switching device 74a and a second switching device 74b connected in series between the positive rail 22 and the negative rail 24 with a common connection 75 between the first and second switching devices 74a, 74b. The first switching device 74a in each leg may also be referred to herein as an upper switch, and the second switching device 74b in each leg may also be referred to herein as a lower switch. The terms upper and lower are relational only with respect to the schematic representation and are not intended to denote any particular physical relationship between the first and second switching devices 74a, 74b. The switching devices 74 include, for example, power semiconductor devices such as transistors, thyristors, and silicon-controlled rectifiers, which receive the switching signals 72 to turn on and/or off. Each of switching devices may further include a diode connected in a reverse parallel manner between the common connection 75 and either the positive or negative rail 22, 24.

The processor 52 also receives feedback signals from sensors providing an indication of the operating conditions within the power segment or of the operating conditions of a coil 150 connected to the power segment. According to the illustrated embodiment, the power segment includes a voltage sensor 62 and a current sensor 60 at the input of the power segment. The voltage sensor 62 generates a voltage feedback signal and the current sensor 60 generates a current feedback signal, where each feedback signal corresponds to the operating conditions on the positive rail 22. The segment controller 50 also receives feedback signals corresponding to the operation of coils 150 connected to the power segment. A voltage sensor 153 and a current sensor 151 are connected in series with the coils 150 at each output of the power section. The voltage sensor 153 generates a voltage feedback signal and the current sensor 151 generates a current feedback signal, where each feedback signal corresponds to the operating condition of the corresponding coil 150. The processor 52 executes a program stored on the memory device 54 to regulate the current and/or voltage supplied to each coil and the processor 52 and/or gate driver module 70 generates switching signals 72 which selectively enable/disable each of the switching devices 74 to achieve the desired current and/or voltage in each coil 150. The energized coils 150 create an electromagnetic field that interacts with the drive magnets 130 on each mover 100 to control motion of the movers 100 along the track segment 12.

In operation, the independent cart system monitors wear on each of the movers 100 present in the system. The fleet manager, executing on either the edge controller 260, data processing center 280, or combination thereof, utilizes the wear information and issues motion commands to movers 100 as a function of the wear detected on the mover.

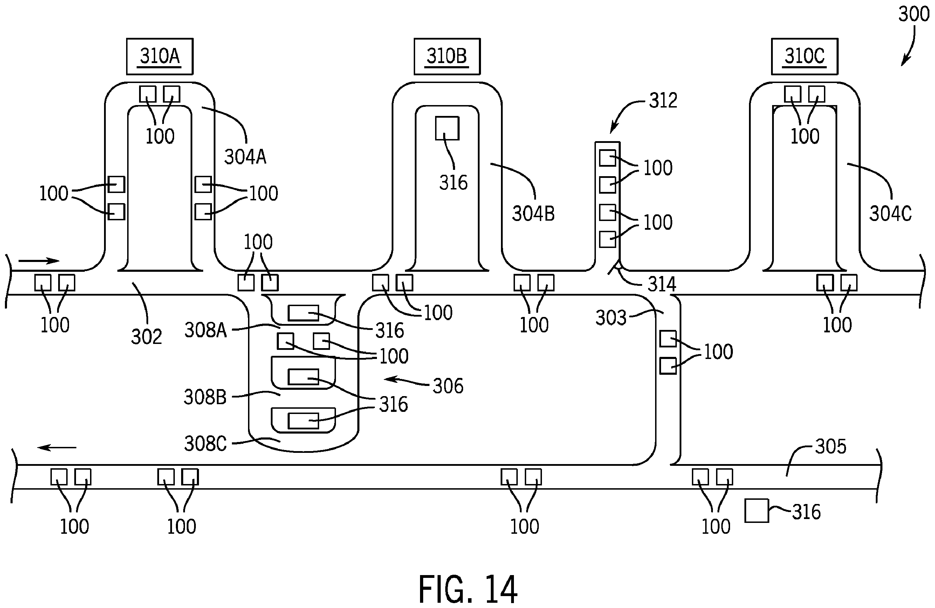

Turning next to Fig. 14, a portion of a track layout for an exemplary independent cart system 300 is illustrated. The illustrated system 300 includes a primary track 302 having a direction of travel that is generally from left-to-right in the figure. The illustrated portion of the independent cart system 300 also includes three branch segments 304, where each branch segment 304 passes by a station 310 where an operation may be performed to a payload on the movers 100. A first branch segment 304A passes a first station 310A, a second branch segment 304B passes a second station 310B, and a third branch segment 304C passes a third station 310C. Movers 100 are commanded along each branch segment as a function of a payload present on the mover.

The illustrated portion of the independent cart system 300 further includes a first bypass track segment 306 and a second bypass track segment 312. The first bypass track segment 306 has three parallel branches 308A, 308B, and 308C, where each parallel branch is configured to receive one or more movers 100. The parallel branches 308A, 308B, 308C allow movers 100 to transition off the primary track 302 such that another mover 100 or set of movers may pass those movers 100 located on the bypass track segment 306. The parallel branches 308A, 308B, 308C further allow multiple movers 100 to be reordered in varying sequences rather than requiring a first-in-first-out operation.

The second bypass track segment 312 is a single track segment. A switching lever 314 selectively allows a mover 100 to enter the second bypass segment 312 from the left and exit the second bypass segment to the right. If another mover 100 is commanded to enter the second bypass track segment 312, each mover 100 already present in the second bypass track segment 312 must move away from the primary track segment 302 to make room for the next mover 100. The last mover 100 that enters the second bypass track segment 312 is the first mover 100 to exit. The second bypass track segment 312 allows for a simple reversal of order of movers 100 entering the segment. In addition to reordering movers 100, the first and second bypass track segments 306, 312 may be used as queuing locations. As a queuing location, a number of movers 100 may be parked on the bypass track segment until a mover 100 is required at one of the stations 310. The fleet manager may determine that one of the parked movers 100 is preferred to be sent to the station 310 and issue a command to have the mover 100 travel to the corresponding station.

The illustrated portion of the independent cart system 300 also includes a return track segment having a direction of travel that is generally from right-to-left in the figure. The return track segment 305 receives the majority of movers 100 in a further portion of the independent cart system 300 from the right beyond the illustrated portion and returns the movers 100 to a portion of the independent cart system 300 to the left beyond the illustrated portion. A return branch 303 is also shown inserted between the primary track segment 302 and the return track segment 305. The return branch 303 allows a portion of the movers 100 to bypass the third branch segment 304C and the remainder of the independent cart system 300 to the right of the illustrated portion.

The machine learning model is trained to observe operation of the movers 100 in the independent cart system 300 to both monitor wear on each mover 100 and to distribute wear among the movers 100. For ease of discussion, the machine learning model and the fleet manager will be described herein as executing on the edge controller 260. The described embodiment is not intended to be limiting. It is understood that the machine learning model and the fleet manager may be implemented in part or in whole either locally on the edge controller 260 or remotely on the data processing center 280. According to one aspect of the invention, the machine learning model may provide for supervised learning of the independent cart system. With supervised learning, at least one model of operation for the movers 100 is stored in memory 268. Each model of operation is configured to predict operation of a mover 100 as a function of one or more inputs to the model. The complexity of the models depends, at least in part, on the complexity of the application and of the desired prediction. For example, if a model is to predict a time to arrive at a location for each mover, the model may require just a present location and a commanded speed for each mover. The model may then predict a time at which each mover will arrive at a location. In some applications, varying payloads may be transferred by the movers 100. The payloads may have different weights, or be subject to different limitations, such as a reduced speed at which the mover 100 may travel or a reduced acceleration/deceleration at which the mover 100 may change speed to avoid upsetting the payload. The model of operation may receive additional inputs including the payload to be carried or the maximum acceleration/deceleration at which the mover 100 may travel as a result of the payload. The enhanced model of operation provides a more precise prediction of time at which the mover 100 may reach a destination than simply using a present location and a commanded speed for each mover. Supervised learning provides an initial prediction based on models of operation for the independent cart system.

The supervised learning is supplemented by monitoring operation of the movers 100 as they travel in the independent cart system 300. The machine learning model receives multiple inputs. The inputs may be reference signals corresponding to desired operation of each mover 100 as well as feedback signals corresponding to actual operation of each mover 100. Reference signals include, but are not limited to, positions along the track to which a mover 100 is commanded, speed commands, acceleration commands, expected payloads to be carried by each mover, or whether a mover 100 is to operate individually, in tandem, or in a platoon. Feedback signals include, but are not limited to, signals from position sensors 145, current sensors 151, optical sensors mounted adjacent to the track to observe operation of each mover 100, or other sensors related to the process being performed at a station 310.

Under ideal operating conditions, precise models of operation provided to the machine learning model would provide accurate predictions for mover 100 operation. However, models of operation may not account for every operating condition. Further, manufacturing and assembly tolerances create variation in operation between movers 100 and variation in operation of a single mover between different track segments. Manufacturing tolerances in sensors result in different feedback signals between different sensors that are manufactured in an identical fashion. As a result, even the most precise model of operation will not provide an exact prediction of the operation of each mover 100. Utilizing the various inputs, the machine learning model adapts the predictions over time as a function of the actual operation for each mover 100. The machine learning model may first generate predicted operation of a mover 100 in the independent cart system. The machine learning model then reads feedback signals corresponding to actual operation of the mover 100 over multiple runs along the track. The machine learning model observes differences between predicted operation and observed operation and adapts the models to account for actual performance. As a result, the predictions improve over time observing the actual performance of the independent cart system.

According to another aspect of the invention, the machine learning model may provide unsupervised learning of the independent cart system. With unsupervised learning, the machine learning model has no initial model of operation. The machine learning model still receives the input signals. The input signals may be reference signals corresponding to desired operation of each mover 100 as well as feedback signals corresponding to actual operation of each mover 100. The machine learning model monitors the input signals for multiple runs of each mover 100 along the track. The machine learning model detects patterns of operation for each mover as a function of the inputs over the series of runs. Over time, the machine learning model generates patterns of operation for the independent cart system. According to still another aspect of the invention, the machine learning model may be, in part, supervised and, in part, unsupervised. The machine learning model may receive models for some aspects of operation for the independent cart system and may monitor other aspects of operation to detect patterns of operation without having models of operation for those aspects of the system.

The machine learning model may be utilized to predict wear on each of the movers 100 in the independent cart system 300. In a supervised system, models may be provided which predict wear on a mover 100 as a function of inputs indicating, for example, a distance traveled, a weight of the payload transported by the mover, and/or a speed of travel by the mover. Further inputs may receive a feedback signal generated by a sensor where the feedback signals varies as a function of the level of wear experienced on the mover 100.

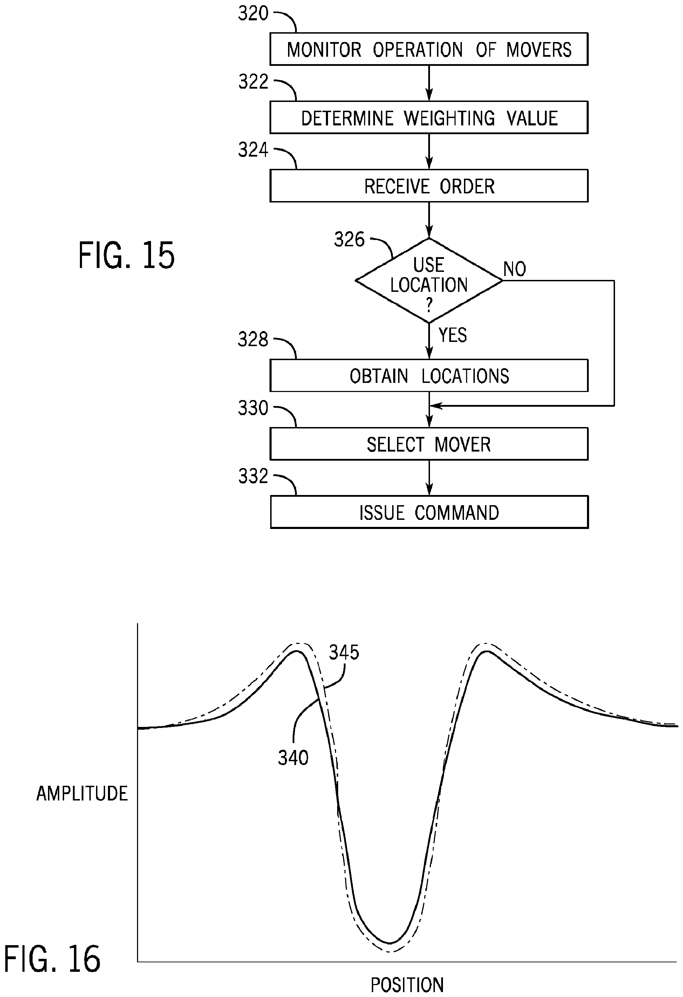

According to one aspect of the invention, the position sensors 145 are used to monitor wear on movers 100. With reference to Fig. 16, the position sensors 145 generate a nominal feedback signal 340 when no wear is present on the mover 100. The nominal feedback signal 340 corresponds to an amplitude of the magnetic field generated by the drive magnets 130 as the mover 100 travels past the sensor 145. With reference again to Fig. 10, the position sensors are located within the track segment 12 at a location proximate the drive magnets 130 as the mover 100 travels past the sensor 145. The position sensors 145 are located a fixed distance from the surface of the channel 15 in which the movers 100 travel. The drive magnets 130 are initially spaced apart from the surface of the channel by a distance which includes a thickness of a lower surface 106 of the body 102 of the mover 100. This lower surface 106 includes a contacting surface which wears during operation of the mover. As the contacting surface wears, the thickness of the lower surface 106 decreases, bringing the drive magnets 130 closer to the surface of the channel 15. Because the drive magnets 130 are closer to the surface of the channel 15, the spacing between the drive magnets 130 and the position sensors 145 decreases. As the spacing decreases, the amplitude of the feedback signal increases. With reference again to Fig. 16, a second feedback signal 345 increases in amplitude as the lower surface 106 of the mover 100 wears.

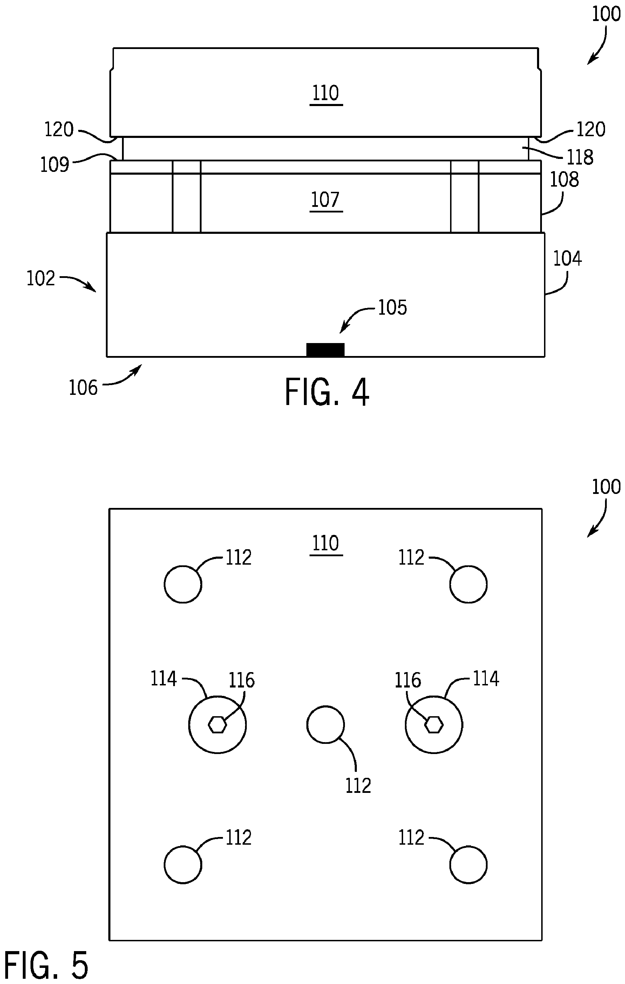

According to another aspect of the invention, an optical sensor 316 may be utilized to detect wear on a mover 100. An optical sensor 316 may be located at various locations throughout the independent cart system. According to the embodiment illustrated in Fig. 14, a first optical sensor 316 is provided along the return track segment 305. The return track segment 305 may provide a path that the majority of movers 100 travel along, allowing each mover to be scanned as it passes the optical sensor 316. Optionally, an optical sensor 316 may be positioned next to a station 310. According to the illustrated embodiment, an optical sensor 316 is shown next to the second station 310B. At some stations 310, a mover 100 may need to slow or come to a stop. The reduced speed may improve the ability for an optical sensor 316 to scan movers 100 while they are interacting with the station. According to yet another option, one of the branches of the independent cart system 300 may be dedicated for measuring wear on movers 100. The bypass track segment 306 is shown with an optical sensor 316 located along each of the parallel branches 308. Each mover 100 may be scheduled to periodically travel into the bypass track segment 306 to be scanned at one of the parallel branches. With reference also to Fig. 4, each mover 100 may include a wear marking 105 along one or both sides of the mover 100. The wear marking may be a solid mark extending from the bottom of the mover 100 for a fixed distance. Optionally, the wear marking may be a single line placed at a known distance from the edge of the bottom of the mover 100. Still other indicia may be utilized that are observable by the optical sensor 316.

The optical sensor generates a feedback signal corresponding to light reflected from the side of the mover 100. The feedback signal may vary, for example, as a function of an amount of light reflected off the wear mark in contrast to an amount of light reflected from the side of the mover 100. Optionally, the optical sensor 316 may be configured to detect color in a color spectrum, such as the Red-Green-Blue (RGB) spectrum. The wear marking 105 may be a different color than the color of the side of the mover, and the feedback signal indicates the location of the wear mark along the side of the mover 100. The machine learning model receives the feedback signal and determines a distance between the wear mark 105 and the bottom edge of the mover 100. As the mover wears, the distance between the wear mark 105 and the bottom edge of the mover decreases. The magnetic sensing and optical sensing options are not intended to be limiting. Still other sensing techniques may be utilized to detect wear on the mover 100 during operation of the independent cart system. The machine learning model monitors the feedback signal to either verify and improve predictions of wear with a supervised system or to determine patterns of wear in movers 100 with an unsupervised system.

With reference to Fig. 15, steps for distributing wear between movers 100 according to one embodiment of the invention are illustrated. At step 320, operation of the movers 100 is monitored as discussed above with respect to the machine learning system. At step 322, a weighting value is determined. The weighting value is determined, at least in part, as a function of the amount of wear determined for each mover 100. The weighting value utilizes the predicted values from a supervised learning system, the patterns detected from an unsupervised learning system, or a combination thereof to assign a weighting value to each mover 100. The operating factors discussed above, such as distance traveled by each mover 100, the payload present on each mover as the mover travelled, the amount of wear detected by the position sensors 145 or by an optical sensor, or a combination thereof, are utilized to generate the weighting value. According to one aspect of the invention, the weighting value may be a value between zero and one or between zero and one hundred percent. When a mover 100 is initially inserted into the independent cart system 300, it receives a new weighting value of one, or one hundred percent. As the mover 100 is commanded to move, the weighting value is gradually reduced toward zero.

The machine learning system may use the weighting value to predict required maintenance within the independent cart system. It may be preferable to service a mover 100 when the weighting value reached ten percent wear remaining. The machine learning system may detect patterns of usage and predict when a mover 100 will reach ten percent wear remaining. The machine learning system can generate a message to a technician with a prediction of when the mover 100 will reach ten percent. The machine learning system may further monitor the feedback signals to verify when each mover 100 reaches ten percent wear remaining.

At step 324, an order for a mover 100 to travel to a location within the independent cart system 300 is received. The fleet manager is responsible for sending movers 100 to desired locations. The order may be, for example, a command from one of the stations 310 indicating a mover is needed at the station. Optionally, the command may be an output of a scheduler which may require, for example, a new mover 100 to arrive at a location in the independent cart system 300 at fixed time intervals. According to still another option, the order may be an order from a website. The order may correspond to a product to be manufactured with specific options selected. The fleet manager can convert the order to a series of steps required by the independent cart system to move a product through the process and to have the various options installed in the product.

The fleet manager selects one or more of the movers 100 in the independent cart system to fulfill the order, at least in part, as a function of the weighting values assigned to each mover 100. At step 326, a decision is made to determine whether to use the present location of the mover 100 as well. If the present location of the movers 100 in the system are used, the fleet manager obtains the position of each mover 100. The position of each mover need not be read from sensors at each instance in which a mover 100 is to be assigned. Rather, the position sensor 145 generate feedback signals corresponding to the present location of a mover 100 as it travels along the track. A table, database, or other structure in memory 268 maintains a record of the present location for each mover 100 as the mover travels along the track. The fleet manager may read the present location for the movers 100 from memory 268 and use the present location of the mover in selecting a mover 100 to respond to the order.

At step 330, the fleet manager selects a mover 100 to fulfill each order. According to a first aspect of the invention, the fleet manager may rely solely on the weighting value provided from the machine learning model. The weighting value for each mover 100 provides an indication of a level of wear present on the corresponding mover, and the fleet manager selects a mover 100 as a function of this weighting value. According to another aspect of the invention, the fleet manager may use both the weighting value and the present location of each mover 100 within the independent cart system 300. A mover selection value may be determined by multiplying the weighting value by a distance for the mover 100 to travel between its present location and the target location indicated by the order. Thus, a mover 100 that has a first mover with a weighting value indicating slightly less wear than a second mover may not be selected to complete the order if the first mover is located at an opposite end of the independent cart system and the second mover is located close to the target location. However, a first mover which is located a large distance from the target location may still be selected to complete the order if it has little or no wear, as indicated by its weighting value, and a second mover which is close to the target location has substantial wear and is close to requiring maintenance. According to still another aspect of the invention, the fleet manager may use not only the weighting value and current location of the mover 100, but also utilize patterns determined by the machine learning model. The patterns may identify, for example, sections of the independent cart system 300 having high utilization. With reference to Fig. 14, stations 310A may have a high level of traffic and station 310B may have a low level of traffic. The fleet manager can circulate movers 100 with less wear closer to station 310A such that they are more likely to have a higher mover selection value when an order arrives for a mover to move to station 310A. Movers with increased wear can be circulated closer to station 310B since the frequency of orders from this station is reduced. Although the movers 100 close to station 310B with increased wear may have a lower weighting value than the movers 100 close to station 310A with less wear, the movers 100 close to station 310B can still have a higher selection value for the second station 310B due to their proximity to the station. Since the movers 100 proximate the second station will not need to move as frequently as movers located proximate the first station 310A, the amount of wear between the movers at each station will even out. Once a mover 100 has been selected to fulfill the order, the fleet manager issues a motion command for the mover, as shown in step 332. The motion command is transmitted to the industrial controller 200 or node controller 170, which relays an appropriate command to the segment controller 50 for the track segment 12 on which the mover 100 is located.

It is further contemplated that a further set of rules for preferred operation of the independent cart system 300 may be stored in memory 268. The additional set of rules may further impact the fleet manager selecting a mover 100. The additional set of rules define preferred operation in a particular application. One such set of rules may correspond to preferred maintenance schedules. For example, in one application it may be desirable to provide even wear across all movers 100, such that all movers are serviced during a single shut-down period. In another application, it may be desirable to increase wear on a subset of movers 100, such that those movers may be taken out of service for maintenance while other movers continue operation. Thus, in addition to using the weighting value, present location of the mover 100, and patterns detected by the machine learning system, the fleet manager may further base selection of the mover on the desired maintenance schedule. Based on existing wear detected on each mover and the wear predictions generated by the machine learning system, the fleet manager schedules movers to perform tasks within the independent cart system to achieve the preferred maintenance schedules.

In some applications, movers 100 may travel in tandem or in platoons with more than two movers travelling together. A single payload may be loaded across multiple movers, or a repetitive series of payloads may be mounted on each of the movers travelling together. With a single payload loaded across multiple movers, the weight may be unevenly distributed on each of the movers. Similarly, if a series of payloads are repetitively mounted on a series of movers 100, the payload may vary between movers in the platoon yet the same mover in each sequence would continually receive the same payload. As a result of the variations in payload, different movers 100 in a tandem pair or in a platoon may experience more wear than another mover. The machine learning model may detect such patterns of operation for payloads being distributed on movers 100. Two movers operating in tandem may be physically linked together or may simply be controlled to travel in tandem. In order to manage wear on movers 100 operating in tandem, the fleet manager may command the pair of movers 100 to a bypass track segment. For example, if the two movers are commanded to enter the second bypass track segment 312, when they leave the second bypass track segment 312 the order of the movers 100 will be reversed, thereby distributing the wear more evenly on each of the movers 100 in the pair. Similarly, the fleet manager may use the first bypass track segment 306 to reorder movers 100 operating in a platoon. By scheduling movers 100 along the different parallel paths 308A, 308B, 308C, the movers 100 can enter in one order and exit in a different order.

It is another aspect of the independent cart system 300, particularly as the number of movers 100 increases, that queues of movers 100 are present at different locations along the track. The movers 100 may, for example, queue along the main track segment 302 to the left of the three stations 310A, 31 0B, 310C such that a mover 100 is always ready to enter one of the stations when needed. The fleet manager may use such a queue to facilitate distributing wear among the movers. The fleet manager may receive multiple orders or may receive a single order requiring multiple movers 100 to be commanded to different locations across the independent cart system to complete the order. The fleet manager determines how many movers 100 are required to complete the next set of orders or to complete a single, multi-mover order and reads the weighting value for that number of the movers 100 next up in the queue. The fleet manager selects movers 100 from the queue to perform different orders or to perform different segments of a single order according to the weighting value. Prior systems would require a first-in-first-out approach, such that the next mover available in the queue performed the next order received by the fleet manager. Utilizing the weighting values of the movers 100 present in the queue allows orders to be distributed among the movers 100 present in a queue in a manner to achieve desired wear distribution objectives.

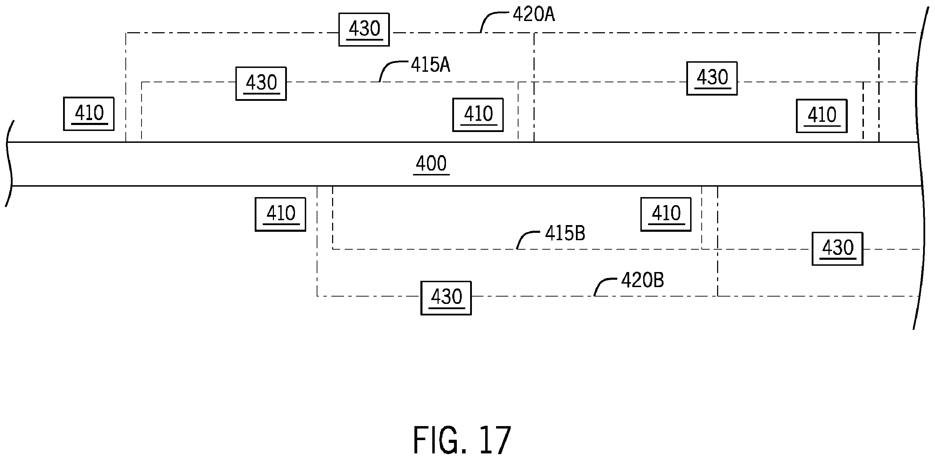

Turning next to Fig. 17, an alternate embodiment of the independent cart system described above is illustrated. Fig. 17 includes a process line 400 with stations 410 on either side of the process line. Tasks to be performed at each station 410 require materials to be periodically delivered to each station 410. The materials are delivered from a warehouse area (not shown) via automated guided vehicles (AGVs) 430. Each AGV travels along a predefined path. According to the illustrated embodiment, a first path is a delivery path 415 and a second path is a return path 420. A first delivery path 415A is present on the top side of the process line, allowing AGVs 430 to deliver material to each station 410. The delivery path 415 may be defined by coordinates stored in the AGV 430, indicia marked along the floor, or a combination thereof. After delivering material from each station 410, the AGVs 430 return to the warehouse are via a first return path 420A. The return path 420 may similarly be defined by coordinates stored in the AGV 430, indicia marked along the floor, or a combination thereof. A second delivery path 415B and a second return path 420B are present on the lower side of the process line to serve stations 410 along the lower side of the process line. The machine learning model and the fleet manager may control operation of the AGVs 430 along the forward and return paths 415, 420 in the same manner discussed above with respect to vehicles 100 travelling along a fixed track 10.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**The following is a list of further preferred embodiments of the invention:**
Embodiment 1. A system for distributing wear on a plurality of movers in an independent cart system, the system comprising:
   a sensor generating a feedback signal, wherein:
      the feedback signal is selectively generated for each of the plurality of movers as each of the plurality of movers is present within a detection range for the sensor, and
      the feedback signal varies for a mover as a function of a level of wear present on the mover; and
      a fleet manager, including:
         a memory operative to store a plurality of instructions and a weighting value for each of the plurality of movers, wherein the weighting value is determined as a function of the level of wear present on the mover, and
   a processor operative to execute the plurality of instructions to:
      receive an order for one of the plurality of movers to travel along a track in the independent cart system;
      read the weighting value from the memory for a first portion of the plurality of movers;
      determine a selected mover from the first portion of the plurality of movers as a function of the weighting value read for each of the first portion of the plurality of movers; and
      generate a motion command for the selected mover as a function of the order.
Embodiment 2. The system of embodiment 1, wherein the processor is further operative to:
   receive a plurality of inputs, wherein:
      each of the plurality of inputs corresponds to an operating condition for a mover as the mover travels along the track,
      the plurality of inputs are received for each of the plurality of movers over a plurality of runs along the track, and
      the plurality of inputs define a training set of data for the plurality of movers; and
      determine the weighting value for each of the plurality of movers as a function of the training set of data.
Embodiment 3. The system of embodiment 2, wherein:
   the memory is further operative to store at least one model of operation defining a predicted operation for the mover,
   the at least one model receives the plurality of inputs, and
   the processor is further operative to:
      determine at least one predicted operation as a function of the plurality of inputs, and
      determine the weighting value as a function of the at least one predicted operation.
Embodiment 4. The system of embodiment 2, wherein the processor is further operative to:
   detect at least one pattern of operation for the mover from the plurality of inputs, and
   determine the weighting value as a function of the at least one pattern of operation.
Embodiment 5. The system of embodiment 2, wherein the plurality of inputs is selected from the group consisting of a weight of a payload present on the mover, a distance travelled by the mover, a speed of the mover, and a present value of the weighting value for each of the plurality of movers.
Embodiment 6. The system of embodiment 2, wherein the processor is further operative to:
   receive a present location of each of the plurality of movers along the track, and
   determine the selected mover as a function of the weighting value and the present location for each of the plurality of movers.
Embodiment 7. The system of embodiment 1, wherein the sensor generates the feedback signal as a function of a magnetic field measured within the detection range for the sensor and wherein each of the plurality of movers includes at least one drive magnet to generate the magnetic field.
Embodiment 8. The system of embodiment 1, wherein the sensor generates the feedback signal as a function of a mark located on the mover within the detection range and wherein a relative position of the mark varies as a function of the level of wear present on the mover.
Embodiment 9. A system for distributing wear on a plurality of movers in an independent cart system, the system comprising a machine learning model executing on a processor, the machine learning model operative to:
   receive a plurality of inputs for each of the plurality of movers, wherein:
   each of the plurality of inputs corresponds to an operating condition for one of the movers as the mover travels along a track for the independent cart system,
   each of the plurality of inputs are received for each of the plurality of movers over a plurality of runs along the track, and
   the plurality of inputs received generate a training set of data for the plurality of movers; and
   determine a weighting value for each of the plurality of movers as a function of the training set of data, wherein the weighting value corresponds to a level of wear present on each of the plurality of movers.
Embodiment 10. The system of embodiment 9, further comprising a fleet manager executing on the processor, the fleet manager operative to:
   receive an order for one of the plurality of movers to travel along the track;
   determine a selected mover for the order as a function of the weighting value for each of the plurality of movers; and
   generate a motion command for the selected mover as a function of the order.
Embodiment 11. The system of embodiment 10, wherein the fleet manager is further operative to:
   receive a present location of each of the plurality of movers along the track, and
   determine the selected mover for the order as a function of the weighting value and the present location for each of the plurality of movers.
Embodiment 12. The system of embodiment 9, further comprising a memory operative to store at least one model of operation defining a predicted operation for each of the plurality of movers, wherein the machine learning model is further operative to determine the weighting value as a function of the predicted operation.
Embodiment 13. The system of embodiment 9, wherein the machine learning model is further operative to:
   detect at least one pattern of operation for each of the plurality of movers from the plurality of inputs, and
   determine the weighting value as a function of the at least one pattern of operation.
Embodiment 14. The system of embodiment 9, wherein the plurality of inputs are selected from the group consisting of a weight of a payload present on each mover, a distance travelled by each mover, a speed of each mover, and a present value of the weighting value for each of the plurality of movers.
Embodiment 15. A method for distributing wear on a plurality of movers in an independent cart system, the method comprising the steps of:
   monitoring operation of the plurality of movers over a plurality of runs along a track for the independent cart system;
   generating a weighting value corresponding to a level of wear present on each of the plurality of movers as a function of the plurality of runs;
   receiving an order for one of the plurality of movers to travel along the track; and
   selecting one of the plurality of movers to complete the order as a function of the weighting value for each of the plurality of movers.
Embodiment 16. The method of embodiment 15, further comprising the steps of:
   receiving a present location of each of the plurality of movers along the track, and
   selecting one of the plurality of movers to complete the order as a function of the weighting value and the present location for each of the plurality of movers.
Embodiment 17. The method of embodiment 15, further comprising the steps of:
   storing at least one model of operation for each of the plurality of movers in memory;
   predicting operation of each of the plurality of movers for the order as a function of the at least one model; and
   determining the weighting value as a function of the predicted operation.
Embodiment 18. The method of embodiment 17, further comprising the step of receiving a feedback signal from a sensor for each of the plurality of movers as each of the plurality of movers is present within a detection range for the sensor, wherein the feedback signal varies for a mover as a function of the level of wear present on the mover.
Embodiment 19. The method of embodiment 18, further comprising the step of determining the weighting value as a function of the predicted operation and as a function of the feedback signal received for each of the plurality of movers.
Embodiment 20. The method of embodiment 15, further comprising the steps of:
   detecting at least one pattern of operation for each of the plurality of movers, and
   determining the weighting value as a function of the at least one pattern of operation.

## Claims

1. A system for distributing wear on a plurality of movers in an independent cart system, the system comprising:
a sensor generating a feedback signal, wherein:
the feedback signal is selectively generated for each of the plurality of movers as each of the plurality of movers is present within a detection range for the sensor, and
the feedback signal varies for a mover as a function of a level of wear present on the mover; and
a fleet manager, including:
a memory operative to store a plurality of instructions and a weighting value for each of the plurality of movers, wherein the weighting value is determined as a function of the level of wear present on the mover, and
a processor operative to execute the plurality of instructions to:
receive an order for one of the plurality of movers to travel along a track in the independent cart system;
read the weighting value from the memory for a first portion of the plurality of movers;
determine a selected mover from the first portion of the plurality of movers as a function of the weighting value read for each of the first portion of the plurality of movers; and
generate a motion command for the selected mover as a function of the order.

2. The system of claim 1, wherein the processor is further operative to:
receive a plurality of inputs, wherein:
each of the plurality of inputs corresponds to an operating condition for a mover as the mover travels along the track,
the plurality of inputs are received for each of the plurality of movers over a plurality of runs along the track, and
the plurality of inputs define a training set of data for the plurality of movers; and
determine the weighting value for each of the plurality of movers as a function of the training set of data.

3. The system of claim 2, wherein:
the memory is further operative to store at least one model of operation defining a predicted operation for the mover,
the at least one model receives the plurality of inputs, and
the processor is further operative to:
determine at least one predicted operation as a function of the plurality of inputs, and
determine the weighting value as a function of the at least one predicted operation.

4. The system of one of claims 2 or 3, wherein the processor is further operative to:
detect at least one pattern of operation for the mover from the plurality of inputs, and
determine the weighting value as a function of the at least one pattern of operation.

5. The system of one of claims 2 to 4, wherein the plurality of inputs is selected from the group consisting of a weight of a payload present on the mover, a distance travelled by the mover, a speed of the mover, and a present value of the weighting value for each of the plurality of movers.

6. The system of one of claims 2 to 5, wherein the processor is further operative to:
receive a present location of each of the plurality of movers along the track, and
determine the selected mover as a function of the weighting value and the present location for each of the plurality of movers.

7. The system of one of claims 1 to 6, wherein the sensor generates the feedback signal as a function of a magnetic field measured within the detection range for the sensor and wherein each of the plurality of movers includes at least one drive magnet to generate the magnetic field.

8. The system of one of claims 1 to 7, wherein the sensor generates the feedback signal as a function of a mark located on the mover within the detection range and wherein a relative position of the mark varies as a function of the level of wear present on the mover.

9. A system for distributing wear on a plurality of movers in an independent cart system, the system comprising a machine learning model executing on a processor, the machine learning model operative to:
receive a plurality of inputs for each of the plurality of movers, wherein:
each of the plurality of inputs corresponds to an operating condition for one of the movers as the mover travels along a track for the independent cart system,
each of the plurality of inputs are received for each of the plurality of movers over a plurality of runs along the track, and
the plurality of inputs received generate a training set of data for the plurality of movers; and
determine a weighting value for each of the plurality of movers as a function of the training set of data, wherein the weighting value corresponds to a level of wear present on each of the plurality of movers.

10. The system of claim 9, further comprising a fleet manager executing on the processor, the fleet manager operative to:
receive an order for one of the plurality of movers to travel along the track;
determine a selected mover for the order as a function of the weighting value for each of the plurality of movers; and
generate a motion command for the selected mover as a function of the order, and/or
wherein the fleet manager is further operative to:
receive a present location of each of the plurality of movers along the track, and
determine the selected mover for the order as a function of the weighting value and the present location for each of the plurality of movers.

11. The system of one of claims 9 or 10, further comprising a memory operative to store at least one model of operation defining a predicted operation for each of the plurality of movers, wherein the machine learning model is further operative to determine the weighting value as a function of the predicted operation, or
wherein the machine learning model is further operative to:
detect at least one pattern of operation for each of the plurality of movers from the plurality of inputs, and
determine the weighting value as a function of the at least one pattern of operation, or
wherein the plurality of inputs are selected from the group consisting of a weight of a payload present on each mover, a distance travelled by each mover, a speed of each mover, and a present value of the weighting value for each of the plurality of movers.

12. A method for distributing wear on a plurality of movers in an independent cart system, the method comprising the steps of:
monitoring operation of the plurality of movers over a plurality of runs along a track for the independent cart system;
generating a weighting value corresponding to a level of wear present on each of the plurality of movers as a function of the plurality of runs;
receiving an order for one of the plurality of movers to travel along the track; and
selecting one of the plurality of movers to complete the order as a function of the weighting value for each of the plurality of movers.

13. The method of claim 12, further comprising the steps of:
receiving a present location of each of the plurality of movers along the track, and
selecting one of the plurality of movers to complete the order as a function of the weighting value and the present location for each of the plurality of movers.

14. The method of one of claims 12 or 13, further comprising the steps of:
storing at least one model of operation for each of the plurality of movers in memory;
predicting operation of each of the plurality of movers for the order as a function of the at least one model; and
determining the weighting value as a function of the predicted operation, and/or
further comprising the step of receiving a feedback signal from a sensor for each of the plurality of movers as each of the plurality of movers is present within a detection range for the sensor, wherein the feedback signal varies for a mover as a function of the level of wear present on the mover, and/or
further comprising the step of determining the weighting value as a function of the predicted operation and as a function of the feedback signal received for each of the plurality of movers.

15. The method of one of claims 12 to 14, further comprising the steps of:
detecting at least one pattern of operation for each of the plurality of movers, and
determining the weighting value as a function of the at least one pattern of operation.
